# EUROPEAN PATENT APPLICATION

(11) **EP 1 270 401 A2**
(43) Date of publication of application: **02.01.2003**
(21) Application number: 02012890.6
(22) Date of filing: 11.06.2002
(51) Int. Cl.: B63H 1/10, B63H 5/125

(54) **Propulsion unit for water vehicles**

(30) Priority: 19.06.2001 IT TO20010593
(71) Applicant: Donatelli, Carlo, 10123 Torino (IT)
(72) Inventor: Donatelli, Carlo, 10123 Torino (IT)
(74) Representative: Bosotti, Luciano

(57) **Abstract**

A propulsor (2), of the type with paddles orbiting in the direction of propulsion and continuously and independently orientable during propulsion, associated with a lifting device (5 to 8) for selectively varying the depth of immersion of the paddles (3) between a position of maximum projection and a position of maximum withdrawal with respect to the hull. In the said position of maximum withdrawal, the paddles (3) can also be completely hidden within the hull of the boat. The preferential application is for boats destined to navigate in shallow waters and/or as an auxiliary propulsor for sailing boats.

## Description

The present invention refers to propulsor units for boats with particular regards to improvements that can be made to propulsors of the type described in document WO-A-92/07189.

Propulsors of this type can essentially be defined as "propulsors with paddles orbiting in the direction of propulsion and continuously and individually orientable during propulsion", thus distinguishing them from both traditional propeller-type propulsors (in which the blades rotate in a plane that is generally orthogonal with respect to the direction of propulsion), and paddle-wheel propulsors as used in the early days of steam propulsion (propulsors in which the paddles rotate in the direction of propulsion, but are mounted in a fixed position with respect to the wheel).

Summarizing, the propulsors described in the aforementioned document include a rotor driven in rotation with respect to a main vertical axis and a number of paddles mounted on the rotor according to a general feathered layout, each paddle being orientable around a respective orientation axis parallel to the rotor's axis of rotation.

Paddle propulsors of the described type allow significant improvements to be achieved in terms of energy efficiency and boat manoeuvring capabilities with respect to propeller propulsors. The intrinsic limit of propeller propulsors is constituted by - at least with regards to energy efficiency - the negative phenomena of rotary turbulence induced by the propeller whilst carrying out its propulsive action.

Paddle propulsors are instead capable of providing a progressive thrust action in water that is substantially similar to that imparted by the fins of fish, without creating useless turbulence, thereby giving rise to a thrust action of high energetic efficiency.

It will be appreciated that these methods of propulsion can also be recognised in traditional oar rowing, in particular in Venetian rowing and the very efficient type of rowing known as "row and go", used on pilot boats equipped with only one oar located on the transom and moved vertically. This also true with regards to the possibility of effecting the thrust action at deeper depth.

For a general illustration of these basic concepts, useful reference can be made to the volume "La gondola - Una straordinaria architettura navale" ("The gondola - An extraordinary naval architecture"), by C. Donatelli - Arsenale Editrice, Venice 1990-1998, and pages 145 - 132 in particular.

The object of the present invention is to further perfect these known solutions of propulsion, with particular regard to the following aspects:
- the possibility of using a boat equipped with the propulsor for navigating even in very shallow waters, such as those typical of lagoons,
- the optimisation of propulsor performance, when used as an auxiliary propulsor on a sailing boat in particular: this also applies in relation to the possibility of using the propulsor as a directional rudder for the boat, with the paddles not rotating but arranged parallel to each other and oriented by the normal helm wheel and/or the possibility of actioning a dynamoelectric generator unit while the boat sails under wind power (for example, to recharge onboard batteries or feed onboard appliances without draining energy from the said batteries), and
- improvements in the boat's manoeuvrability characteristics, for example, by the possibility - with adequate orientation of the paddles - of also manoeuvring the boat in reverse, without the need of an inverter and/or, if it is the case, the option of resorting to more than one propulsor of the described type.

According to the invention, this object is achieved thanks to a propulsor unit possessing the characteristics specifically referred to in the claims that follow.

The invention will now be described, purely by way of a non-limitative example and with reference to the enclosed drawings, where:
- Figures 1 and 2 are two general views, in plan and longitudinal section respectively, of a boat equipped with a propulsor unit in accordance with the invention,
- Figures 3 and 4 correspond to two views of the part indicated by arrow III in Figure 1, and
- Figure 5 is a perspective view from the boat's stern, for the purposes of better illustrating the characteristics of a propulsor in accordance with the invention

In the enclosed drawings, reference B indicates a generic boat identified in, purely by way of example, the typical Venetian boat known as the "topo" ("mouse"). This is a boat that is normally destined for transporting goods and has a length in the order of 11 metres, whilst weighing in the region of approximately three tonnes.

In reality, with regards to the possibility of applying the invention, the boat B can be a boat of any known type and size. For example, the Applicant has carried out utilization tests of a propulsor in accordance with the invention using a small sailing yacht of the type currently denominated "4.70", equipped with a fibreglass hull.

Moreover, the solution in accordance with the invention also lends itself to advantageous utilization in boats of much larger size, such as steamboats of the type used for lagoon navigation in the City of Venice and lake districts, for example.

The fact that the enclosed drawings refer to a "topo" aims at highlighting the fact that the solution in accordance with the invention is particularly suited to utilization on boats destined to navigate in shallow waters (even in the order of 20 - 40 cm and, in any case, well under a metre).

In the illustrated example of embodiment, at a certain distance from the transom of the boat B, a hole has been made at the centre of the hull, in which a well 1, of elongated cylindrical form (with 60 cm major axis and 40 cm minor axis, for example) with the major axis athwartship, has been located and sealed. The reasons for this preference will become clear further on in this description.

In an especially preferred form of embodiment, the well 1 is composed of 2 mm gauge stainless steel sheet, a thickness suitable for housing a propulsor 2.

The well 1 is made with walls that are normally much higher than the waterline because, with the paddles 3 with which the propulsor is equipped drawing water below it, its lower part is destined to be flooded with water.

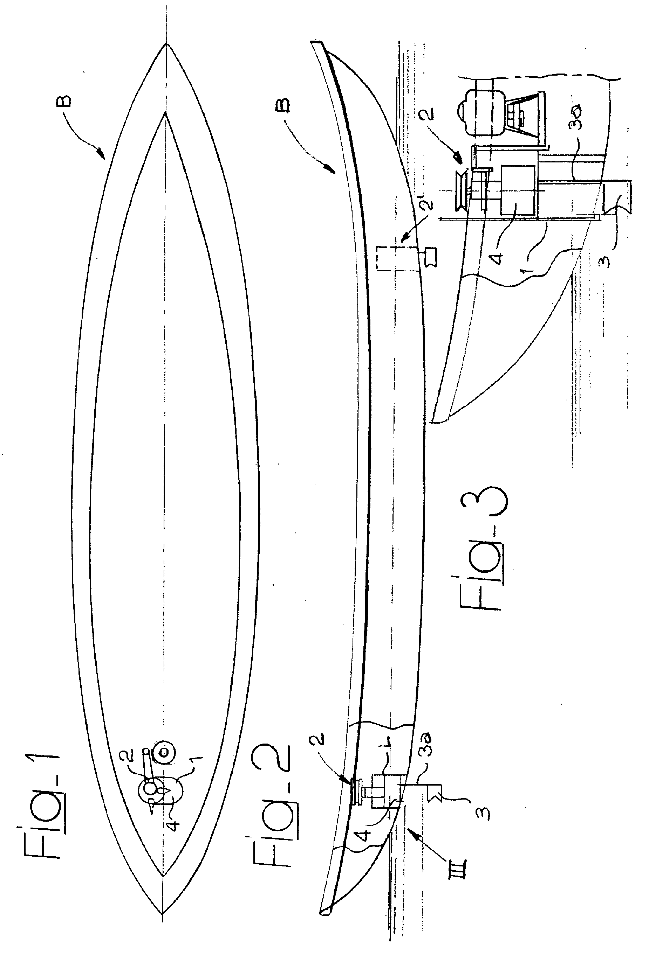

As can be better seen in Figure 2 - in the conditions considered as optimal for performing the thrust action - the paddles 3 in question are immersed by 60 - 100 cm, thereby being able to effect an in-depth thrust action.

As has already been said, the propulsor 2 is of the type with paddles orbiting in the direction of propulsion and continually and individually orientable during propulsion as described, for example, in document WO-A-92/07189, already referred to in the introductory part of this description. The specific criteria of operation of the paddles 3 during propulsion are not illustrated here in detail, also because these criteria do not, in themselves, form part of this patent.

Nevertheless, the rotor of the propulsor, in which the mechanisms that action the paddles 3 during propulsion are situated, is schematically indicated in the figures as item 4.

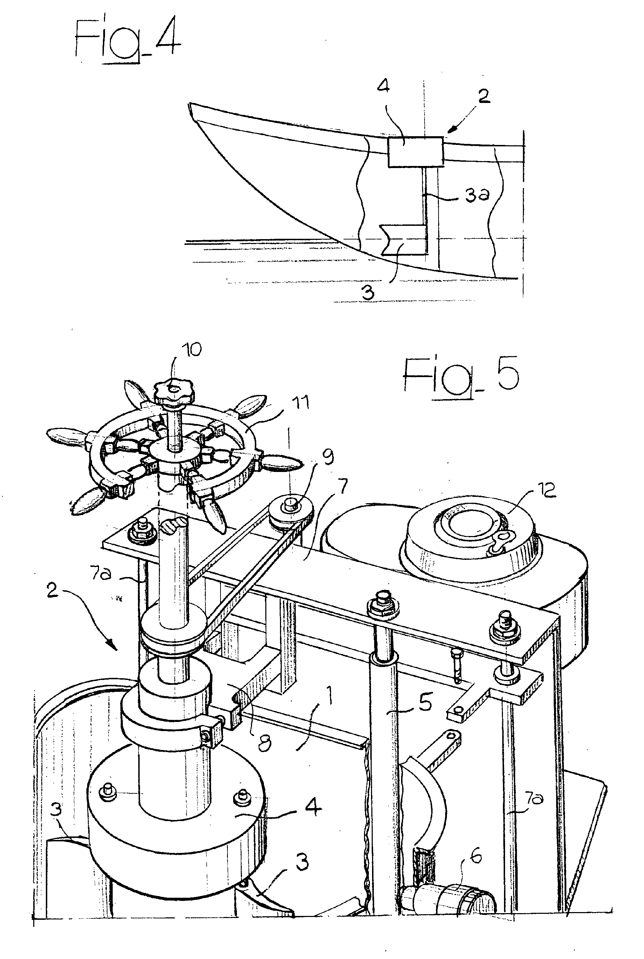

An important characteristic of the solution in accordance with the invention is represented by the fact that, instead of being mounted in a position that is essentially fixed with respect to the boat B, the propulsor 2 is mounted inside the well 1 with a general capability of movement in the vertical sense between:
- a position of maximum immersion of the paddles 3 (schematically illustrated in Figure 2), in which the lower plane of the rotor 4 is almost in the same plane as the keel surface, without extending beyond it, and
- a position of maximum lifting of the paddles 3 (schematically illustrated in Figure 4): in the example of embodiment illustrated herein, this position practically corresponds to a condition of total withdrawal of the paddles 3 inside the keel surface.

A cover that can slide in a direction parallel to the keel plane can be advantageously associated with the lower end of the well 1. The cover in question can then be used for closing the lower aperture of the well 1 to avoid turbulence being created inside the well 1 in cases of sea-going tugs and/or to protect the paddles 3 when the boat B is aground or transported on a trailer.

The cover in question is preferably realized such that when in the closed position for the well 1, it is watertight. In this manner, when closed below by the cover, the well can be easily drained (via a offshoot of the bilge pump) and hence improve the buoyancy characteristics of the boat B.

It will be appreciated that the said lowering/lifting movement of the propulsor 2 can be achieved, as in the case of the example illustrated herein, by associating at least one linear actuator with the propulsor 2 for vertical lifting 5, such as the type available with the brand name "Linear Motion", produced by SKF. The actuator 5 is driven by a motor 6 in a manner such that when the motor 6 (usually an electric motor) is activated in one direction or another, it is possible to generate a precise movement and adjust the emersion/immersion of the propulsor 2 according to the above described method.

In particular, the actuator 5 acts between the hull of the boat B and a lifting saddle 7, sliding vertically on vertical guide rods 7a. The lifting saddle 7 carries a ledge 8 that supports the body of the propulsor 2 and, usually, the motor driving the propulsor as well.

The same extension/retraction movement of the paddles 3 with respect to the keel envelope can however be attained in a different manner by realizing, for example, the paddles 3 - and more precisely the shafts 3a that carry these paddles in a general feathered layout - with the capacity of moving the paddles 3 vertically with respect to the body of the propulsor 2.

Additional, functionally equivalent solutions are within the capabilities of technical experts in this field.

The position of the well 1, not fully aft, ensures that the current of water created by the paddle 3 of the propulsor 2 remains as steady as possible with turbulence reduced to a minimum. It will be appreciated (refer to plan view in Figure 1 in particular) that the rotor 4 of the propulsor 2 is not normally mounted on the centreline of the hull, but is instead mounted in an offset position so as to align the barycentre of thrust of the paddles 3 with the plane of symmetry of the boat B.

These thrust conditions are assured in an almost constant manner, independently of the specific elevation attained by the propulsor 2 and, more precisely, by the paddles 3.

In the position of maximum projection beneath the hull (illustrated in Figure 2) the paddles 3 - which are normally three in number - are completely immersed at a moderate depth beneath the bottom of the hull, thereby operating in a zone of greater water pressure and thus with greater thrust efficiency and the minimization of slip. As has already been said, the shafts 3a that carry the paddles 3 normally exhibit a certain length, in the order of 60 - 100 cm for example.

The possibility of raising the propulsor 2 (or at least the paddles 3) by intervening on the actuator 5 allows the depth of paddles 3 to be adjusted in height to any position between the previously seen end positions. In this way, it is possible, for example, to withdraw the paddles 3 to the intermediate position schematically illustrated in Figure 3.

The depth reached by the paddles can thus be selectively reduced to adapt it to the available draught, thus permitting the boat B to navigate even where the water is very shallow (for example, in swampy areas and/or low-tide conditions, in situations where normal propeller-driven systems - and the rudder - cannot be used because they are inevitably destined to run aground).

All of this is also applicable to possible utilization on fishing boats: in this case, the propulsor in accordance with the invention allows formation of the turbulence typically produced by a propeller propulsor, and which is likely to disturb the fish, to be avoided.

It should also be noted that the position of maximum emersion (Figure 4) is chosen so as to allow the paddles 3 to be completely withdrawn inside the keel envelope. This enormously facilitates haulage operations, because the boat B can be directly rested or even made to slide on its keel without exposing projecting parts that are likely to be damaged. This is also aided by the possible presence of the lower cover of the well, which has been described in precedence.

The generically elongated form of the well 1 is intended to aid the operation of complete withdrawal of the paddles inside the hull, with the paddles 3 mutually aligned in the direction of maximum extension of the well 1.

It will also be appreciated that, precisely due to their shape, the paddles 3 can usefully act as a rudder. In fact, it is possible to arrange the framework of the propulsor 2 such that it can be turned (in the known manner) with respect to the hull of the boat B around a vertical axis via a control manoeuvre, imparted using a normal helm wheel for example.

When the paddles, arranged parallel to each other and fore and aft to the boat B, are made to project beneath the hull of the boat B, the same paddles 3 can easily be used as a rudder by turning the framework of the propulsor 2 with respect to the hull of the boat B. Furthermore, this is accomplished with high hydrodynamic efficiency due to the fact that the rudder action is spread over a number of separate surfaces that operate in unison, even overcoming the need for having a traditional rudder.

In the case where the propulsor 2 is mounted onboard a sailing boat, this method of operation can be easily exploited when navigating under wind power.

All of this with the possibility - should conditions of calm and/or conditions of insufficient wind strength be encountered - of returning the propulsor 2 to thrust mode and thus generate boat motion in conditions of high energetic efficiency.

Similarly, when the boat navigates under wind power, it is possible to exploit the rotary movement induced on the paddles 3, due to progress of the boat B, to drag the main shaft of the rotor 4 in rotation. In this way, it is possible to drag a dynamoelectric machine 9 (possibly consisting of the same motor that drives the propulsor 2) in rotation to charge onboard batteries and/or feed the boat's electrical appliances without draining energy from the batteries. Normally, the possibility of disconnecting from other kinds of non-electric motor via an overrunning clutch is also provided.

Furthermore, should the sailing boat navigate under wind power and it is wished to exploit the navigational characteristics to the full, the propulsor group in accordance with the invention can also be set in the position of maximum emersion, thereby completely withdrawing the paddles inside the hull and eliminating any possible effect of hydrodynamic drag. Naturally, in this case it is useful to provide a traditional rudder and/or a closure element (such as the frequently cited sliding cover), with opportune hydrodynamic characteristics for closing the lower opening of the well 1.

In normal usage as a propulsor, a set of paddles orbiting in the direction of propulsion and continuously and individually orientable during propulsion exhibit the additional advantage deriving from the fact that - by opportunely "phasing" the orientational movement of the paddles 3 with respect to the rotational movement of the rotor 4 - it is possible to selectively vary the direction of thrust over 360°, conferring the boat B with excellent manoeuvrability characteristics, suitable for rendering the boat capable of turning around on itself. In particular, it is possible to reverse the boat's direction of motion without the need of an inverter.

This manoeuvre can be easily implemented by, for example, acting on an orientation knob 10 for the paddles 3, preferably situated at the top of the helm wheel 11 controlling the rudder.

The said endowments of manoeuvrability (and also the endowments of course stability) can be further improved by fitting out the boat B with an auxiliary propulsor 2' (indicated schematically only in Figure 2) situated at the bow and preferably realized with simplified characteristics (for example, equipped with just one paddle instead of a number of paddles). The auxiliary propulsor 2' is normally situated on the boat's plane of symmetry as a course stabilizer.

In this manner, the boat B becomes equipped with two propulsor points localized at the ends of the hull, with the consequent possibility of easily performing lateral docking manoeuvres, carried out by making the boat B move sideways with respect to its main axis, all of this with the limited energy consumption intrinsic to the paddle propulsors considered.

With regards to propulsor drive, it is possible to indifferently use electric motors or, for example, combustion engines (such as the engine indicated as item 12 in Figure 5), even ones with small dimensions and limited power. All of this in consideration of the high energetic efficiency of the propulsor 2.

In particular, via a control (of known type) that allows the "phasing" of the orientational movement the paddles 3 to be varied with respect to the rotational movement of the rotor 4, it is possible to selectively adjust the intensity of thrust produced by the propulsor and that of electrical charging, when the rotor is dragged in rotation by the pressure of the wind on the sails, between a minimum value and a maximum value.

Normally, the number of revolutions of the gearbox that actions the paddles 3 is reduced to take the speed of the boat into account. This can be achieved, for example, by a set of two pairs of pulleys with diameters such as to create the correct reduction in revolutions to confer the paddles with the required peripheral velocity and, at the same time, create greater thrust torque on the paddles 3.

Normally, the boat is equipped with a speed indicator immerged beneath the hull.

In the preferred manner, the motor that drives the paddles 3 of the propulsor 2 also drives a marine alternator (see the dynamoelectric device 9 in Figure 5, for example) that supplies the necessary energy to accumulators, consisting of 12-volt batteries for example. The latter are also destined to feed the power units (consider the motor 6 for example) that govern the emersion/immersion of the propulsor unit 2. These batteries also feed other typical appliances of the boat B, such as speed indicators, navigation lights, bilge pump, siren, etc.

Naturally, the principle of the invention being understood, the constructional details and forms of embodiment could be extensively changed with respect to that described and illustrated, without leaving the scope of this invention.

## Claims

1. A propulsor for boats (B), the propulsor being of the type with paddles (3) orbiting in the direction of propulsion and continuously and individually orientable during propulsion, **characterized by** the fact that the propulsor (2) has an associated lifting device (5 to 8) for selectively varying the depth of immersion of the paddles (3) between a position of maximum projection and a position of maximum withdrawal with respect to the hull of the boat (B).

2. A propulsor according to Claim 1, **characterized by** the fact that the said lifting device (5 to 8) allows the immersion of the paddles (3) to be adjusted in a continuous manner between the said position of maximum projection and the said position of maximum withdrawal, with respect to the hull of the boat (B).

3. A propulsor according to Claim 1 or Claim 2, **characterized by** the fact that, in the said position of maximum withdrawal, the paddles (3) of the propulsor (2) are hidden within the hull of the boat (B).

4. A propulsor according to any of the previous Claims, **characterized by** the fact that, in the said position of maximum projection, the said paddles (3) project by a distance of at least 60 cm with respect to the hull of the boat (B).

5. A propulsor according to any of the previous Claims, **characterized by** the fact that it includes a structure (4) that supports the said paddles (3) in a manner such that they can be oriented and by the fact that the said lifting device (5 and 6) acts on the said support structure (4).

6. A propulsor according to any of the previous Claims, **characterized by** the fact that the said lifting device includes a motorized (6) linear actuator (5).

7. A propulsor according to any of the previous Claims, **characterized by** the fact that the propulsor (2) has an associated well structure (1) for mounting on the boat (B).

8. A propulsor according to Claim 7, **characterized by** the fact that the said well structure (1) has an associated sliding cover for selectively closing the lower aperture of the well (1), preferably in a watertight manner.

9. A propulsor according to Claim 7 or Claim 8, **characterized by** the fact that the said well structure (1) has an elongated shape.

10. A propulsor according any of the Claims 7 to 9, **characterized by** the fact that the said well structure (1) is located in correspondence to one end of the boat (B), preferable at a certain distance from the end.

11. A propulsor according to Claim 1 or Claim 10, in combination with a similar propulsor (2'), possibly with a simplified structure and/or reduced number of paddles, located in correspondence to the other end of the boat (B).

12. A propulsor according to any of the previous Claims, **characterized by** the fact that the said paddles (3), in a state of mutual parallelism, are selectively orientable in order to function as the rudder of the boat (B).

13. A propulsor according to any of the previous Claims, **characterized by** the fact that the said propulsor (2) has an associated dynamoelectric device (9) suitable for being used as an electrical generator actioned by the movement of the said paddles (3) that is induced by the motion of the boat (B).
